(19) Europäisches Patentamt
European Patent Office
Office européen des brevets

(11) **EP 4 023 720 A1**

(12) **EUROPEAN PATENT APPLICATION**
published in accordance with Art. 153(4) EPC

(43) Date of publication:
**06.07.2022 Bulletin 2022/27**

(21) Application number: **20916287.4**

(22) Date of filing: **10.11.2020**

(51) International Patent Classification (IPC):
**C08L 67/06** (2006.01)   **C09D 11/104** (2014.01)
**C08G 63/123** (2006.01)

(52) Cooperative Patent Classification (CPC):
**C08G 63/123; C08L 67/06; C09D 11/104**

(86) International application number:
**PCT/JP2020/041855**

(87) International publication number:
**WO 2021/152953 (05.08.2021 Gazette 2021/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.01.2020 JP 2020014367**

(71) Applicant: **Sakata INX Corporation**
**Osaka-shi, Osaka 550-0002 (JP)**

(72) Inventors:
• **OMI, Naoki**
  **Osaka-shi, Osaka 5500002 (JP)**
• **YOKOYAMA, Yuka**
  **Osaka-shi, Osaka 5500002 (JP)**
• **HISHINUMA, Keishiro**
  **Osaka-shi, Osaka 5500002 (JP)**
• **KANEKO, Toru**
  **Osaka-shi, Osaka 5500002 (JP)**

(74) Representative: **Cabinet Beau de Loménie**
**158, rue de l'Université**
**75340 Paris Cedex 07 (FR)**

(54) **POLYESTER RESIN, INK COMPOSITION FOR OFFSET PRINTING, PRINTED WORK, AND PRODUCTION METHOD FOR PRINTED WORK**

(57)    The polyester resin: is a condensation polymer of a polyol mixture (A) including an epoxidized vegetable oil and a rosin additive, a polycarboxylic acid (B), and a vegetable-derived polyol (C); has a mass ratio (rosin/epoxidized vegetable oil) between the rosin and the epoxidized vegetable oil of 2-10; and has a biomass content of at least 80%. The polyester resin has a high proportion of biomass-derived components and can be used to obtain an offset printing ink composition that has excellent scratch resistance and excellent abrasion resistance.

EP 4 023 720 A1

**Description**

TECHNICAL FIELD

The present invention relates to a polyester resin, an ink composition for offset printing, a printed work, and a production method for a printed work.

BACKGROUND ART

In recent years, activities to reduce environmental burden have been conducted in various industries and categories of industry, but the common ultimate goal thereof is global environmental conservation. In the printing ink industry as well, activities have been conducted to promote the reduction of environmental burden from various perspectives, and products, which meet the gist of such activities, are to be given various certification marks. As such certification marks, there are the NL regulation mark, the vegetable mark, the GP mark, and the clione mark. Under these circumstances, the Japan Printing Ink Makers Association recently has newly established the ink green mark (hereinafter referred to as IG mark) system. The IG mark is a system that mainly uses the ratio of components derived from biomass among the respective components forming the ink composition as an index and ranks the environmentally friendly level of the ink composition in three stages according to the degree of ratio. In other words, it can be said that this system promotes the replacement of fossil resource-derived raw materials with biomass-derived raw materials for the purpose of reducing environmental burden.

By the way, recently, in various printing fields, printing has begun to spread in which the ink composition existing on the surface of the printed work is instantly dried by irradiating the printed work immediately after printing with active energy rays such as ultraviolet rays and electron beams. The ink composition used in this printing contains a photopolymerization initiator that generates radicals and cations by being irradiated with active energy rays and monomers and oligomers that react with these radicals and cations to have a higher molecular weight. The ink composition existing on the surface of the printed work becomes a film-like cured product and is in a dry state by being irradiated with active energy rays. Among such ink compositions, products that are cured using ultraviolet rays are called UV inks. In particular, various products have been proposed in the field of offset printing where high-speed printing is performed. For example, an active energy ray-curable ink composition for offset printing as in Patent Document 1 is known.

In UV inks as well, products that can be dried by being irradiated with a less quantity of ultraviolet rays and energy-saving products that can be dried using light from light-emitting diodes (LEDs) that consume a less quantity of electric power are on sale, and the movement toward reducing the environmental burden is spreading as in other ink compositions. However, it is said that it is difficult to use a large amount of biomass-derived components in UV inks since a large amount of monomers and oligomers are required to be used as the components. Therefore, the current situation is that the accreditation criteria for IG mark do not include the ratio of biomass-derived components but environmentally friendly features such as recycling suitability and energy saving measures are used as indexes instead of this.

Meanwhile, it is socially useful to increase the ratio of biomass-derived components in UV inks as well, and it can be said that the significance is extremely great. For example, Patent Document 2 discloses a polyester resin, which can have an increased ratio of biomass-derived components and is used in an ink composition for offset printing.

PRIOR ART DOCUMENTS

PATENT DOCUMENTS

Patent Document 1: JP-A-2014-173070
Patent Document 2: JP-A-2018-65912

SUMMARY OF THE INVENTION

PROBLEMS TO BE SOLVED BY THE INVENTION

On the other hand, the ink composition for offset printing containing a polyester resin as described above is required to exhibit excellent scratch resistance and abrasion resistance from the viewpoint that the printed work using the ink composition is utilized as a package for products and the like.

The present invention has been made in view of the circumstances, and an object thereof is to provide a polyester resin, which has a high ratio of biomass-derived components and provides an ink composition for offset printing exhibiting excellent scratch resistance and abrasion resistance.

An object of the present invention is to also provide an ink composition for offset printing containing the polyester resin, a printed work including a printed layer formed from the ink composition, and a production method for the printed work.

MEANS FOR SOLVING THE PROBLEMS

In other words, the present invention relates to a polyester resin, which is a polycondensation product of a polyol mixture (A) containing an adduct of an epoxidized vegetable oil and rosin, a polycarboxylic acid (B), and a plant-derived polyol (C), and in which the mass ratio (rosin/epoxidized vegetable oil) of the rosin to the epoxidized vegetable oil is 2 or more and 10 or less and the biomass degree is 80% or more.

The present invention also relates to an ink composition for offset printing containing the polyester resin.

The present invention also relates to a printed work including a printed layer formed from the ink composition for offset printing.

The present invention also relates to a production method for a printed work, which includes a step of performing printing using the ink composition for offset printing.

EFFECT OF THE INVENTION

The details of the mechanism of action of the effects in the polyester resin of the present invention are partially unclear, but are presumed as follows. However, the present invention does not have to be construed as being limited to this mechanism of action.

The polyester resin of the present invention is a polycondensation product of a polyol mixture (A) containing an adduct of an epoxidized vegetable oil and rosin, a polycarboxylic acid (B), and a plant-derived polyol (C), and in the polyester resin, the mass ratio (rosin/epoxidized vegetable oil) of the rosin to the epoxidized vegetable oil is 2 or more and 10 or less and the biomass degree is 80% or more. Since the polyol mixture (A) containing an adduct of an epoxidized vegetable oil and rosin and the plant-derived polyol (C) are raw materials having high biomass degrees, the polyester resin of the present invention has a high ratio of biomass-derived components, has a small amount of unreacted components, and is a resin having a sufficiently high molecular weight. Hence, when the polyester resin of the present invention is used, an ink composition for offset printing exhibiting excellent scratch resistance and abrasion resistance can be obtained.

MODE FOR CARRYING OUT THE INVENTION

The polyester resin of the present invention is a polycondensation product of a polyol mixture (A) containing an adduct of an epoxidized vegetable oil and rosin, a polycarboxylic acid (B), and a plant-derived polyol (C), and in the polyester resin, the mass ratio (rosin/epoxidized vegetable oil) of the rosin to the epoxidized vegetable oil is 2 or more and 10 or less and the biomass degree is 80% or more.

<Epoxidized vegetable oil>

The epoxidized vegetable oil of the present invention is usually obtained by epoxidizing at least a part of carbon-carbon double bonds (C=C) of a vegetable oil with peracetic acid, perbenzoic acid and the like to modify the carbon-carbon double bonds to an epoxy group (epoxy modification). Examples of vegetable oils used as starting materials include hemp seed oil, perilla oil, oiticica oil, cacao oil, kapok seed oil, Torreya nucifera seed oil, mustard oil, apricot kernel oil, kukui nut oil, walnut oil, poppyseed oil, radish seed oil, chaulmoogra oil, camellia oil, niger seed oil, grape seed oil, lentil oil, pine seed oil, peanut oil, rice bran oil, sesame oil, coconut oil, castor oil, palm oil, almond oil, cashew nut oil, hazelnut oil, pine nut oil, dehydrated castor oil, tung oil, linseed oil, sunflower oil, rosehip oil, perilla oil, soybean oil, rapeseed oil, safflower oil, cottonseed oil, sesame oil, corn oil, olive oil, and cocoa butter. It is only required that at least one kind of the vegetable oils is used, and two or more kinds thereof may be used in combination.

Examples of the epoxidized vegetable oil include epoxidized soybean oil, epoxidized linseed oil, epoxidized castor oil, epoxidized corn oil, epoxidized rapeseed oil, epoxidized safflower oil, epoxidized sunflower oil, epoxidized palm oil, epoxidized cottonseed oil, epoxidized olive oil, epoxidized cocoa butter, and epoxidized rice bran oil. As these, vegetable oils obtained by modifying "used edible oils", which are wastes used for home or commercial use (deep frying, deep-fried food and the like) through epoxidation, may be used. For epoxidation, known prescriptions may be used. Among these, epoxidized soybean oil and epoxidized linseed oil are preferable from the viewpoint of commercial availability. It is only required that at least one kind of the epoxidized vegetable oils is used, and two or more kinds thereof may be used in combination.

<Rosin>

The rosin is non-volatile components of pine oil containing abietic acid and its isomers, which are collected from Pinaceae plants, as main components, any rosin having a carboxyl group can be used, and examples thereof include raw material rosin such as natural rosin such as gum rosin, tall oil rosin, and wood rosin. Examples of the rosin include purified rosin obtained by purifying the raw material rosin, hydrogenated rosin obtained by hydrogenating the raw material rosin, disproportionated rosin obtained by disproportionating the raw material rosin, polymerized rosin derived from the raw material rosin, and unsaturated carboxylic acid-modified rosin, which is a reaction product of the raw material rosin with an unsaturated carboxylic acid. Among these, disproportionated rosin and polymerized rosin are preferable. The acid value of rosin is preferably 100 to 200 mg KOH/g. It is only required that at least one kind of the rosin is used, and more kinds thereof may be used in combination.

<Polyol mixture (A)>

The polyol mixture (A) of the present invention is a mixture containing a polyol (adduct) obtained by the addition reaction of the epoxidized vegetable oil and the rosin. The addition reaction may be conducted by reacting an epoxy group of the epoxidized vegetable oil with a carboxyl group of the rosin, for example, using a known reaction catalyst in the atmosphere of an inert gas at about 130°C to 185°C. With regard to the judgment of the termination of reaction, the reaction may be terminated at the time point at which a decrease in acid value of the reaction mixture stops.

In the addition reaction of the epoxidized vegetable oil with the rosin, the mass ratio (rosin/epoxidized vegetable oil) of the rosin to the epoxidized vegetable oil is 2 or more and 10 or less. In the addition reaction of the epoxidized vegetable oil with the rosin, the mass ratio (rosin/epoxidized vegetable oil) of the rosin to the epoxidized vegetable oil is preferably 2 or more and 8 or less, more preferably 3 or more and 6 or less from the viewpoint of diminishing the amount of unreacted components as much as possible.

<Polycarboxylic acid (B)>

The polycarboxylic acid (B) of the present invention is a compound having a plurality of carboxyl groups, and is a component to be polycondensed with a polyol component to increase the molecular weight of the product.

As the polycarboxylic acid (B), known ones can be used, and examples thereof include phthalic anhydride, isophthalic acid, terephthalic acid, adipic acid, trimellitic acid, 1,2-cyclohexanedicarboxylic acid, 1,2-cyclohexendicarboxylic acid, 1,3-cyclohexanedicarboxylic acid, 1,3-cyclohexendicarboxylic acid, 1,4-cyclohexanedicarboxylic acid, 1,4-cyclohexenedicarboxylic acid, hexahydrophthalic anhydride, 5-sodiosulfoisophthalic acid, fumaric acid, benzoic acid, tert-butyl benzoic acid, tetrahydrophthalic anhydride, maleic anhydride, succinic acid, succinic anhydride, fumaric acid, sebacic acid, azelaic acid, tetrabromophthalic anhydride, methyl himic anhydride, tetrachlorophthalic anhydride, hexahydrophthalic anhydride, pyromellitic anhydride, trimellitic anhydride, and methylcyclohexendicarboxylic anhydride. Among these, 1,2-cyclohexenedicarboxylic acid is preferable. It is only required that at least one kind of the polycarboxylic acids (B) is used, and two or more kinds thereof may be used in combination.

<Plant-derived polyol (C)>

The plant-derived polyol (C) of the present invention is a compound having a plurality of hydroxyl groups, and is a component to be polycondensed with a polycarboxylic acid component to increase the molecular weight of the product.

As the plant-derived polyol (C), known ones can be used, and examples thereof include ethylene glycol, 1,2-propanediol, 1,3-propanediol, 1,4-butanediol, 2,3-butanediol, 2-methyl-1,4-butanediol, glycerin, 2,5-dihydroxymethylfuran, castor oil, and cardanol-modified polyol. It is only required that at least one kind of the plant-derived polyols (C) is used, and two or more kinds thereof may be used in combination.

The polyester resin of the present invention is a polycondensation product obtained by subjecting the polyol mixture (A) containing an adduct of an epoxidized vegetable oil and rosin, the polycarboxylic acid (B), and the plant-derived polyol (C) to a polycondensation reaction.

For the polycondensation reaction, a known and commonly used method can be applied, and the polycondensation reaction may be conducted, for example, at about 170 to 250°C in the atmosphere of an inert gas. The reaction time is usually about 5 to 25 hours, but is not particularly limited. With regard to the judgment of the termination of reaction, the reaction may be terminated at the time point at which a decrease in acid value of the reaction mixture stops. The polycondensation reaction can be conducted in a shorter time by distilling the water generated by the polycondensation out of the system or by using a reaction catalyst. Examples of the reaction catalyst include tetrabutyl zirconate, monobutyltin oxide, zirconium naphthete, and tetrabutyl titanate.

The polycarboxylic acid (B) is preferably 1 part by mass or more and 30 parts by mass or less, more preferably 2 parts by mass or more and 20 parts by mass or less with respect to 100 parts by mass of the sum of the epoxidized vegetable oil and the rosin from the viewpoint of the molecular weight and acid value of the polyester resin to be obtained.

The plant-derived polyol (C) is preferably 1 part by mass or more and 30 parts by mass or less, more preferably 2 parts by mass or more and 20 parts by mass or less with respect to 100 parts by mass of the sum of the epoxidized vegetable oil and the rosin from the viewpoint of the molecular weight and acid value of the polyester resin to be obtained.

The polyester resin has a biomass degree of 80% or more. The polyester resin has a biomass degree of preferably 85% or more, more preferably 90% or more from the viewpoint of increasing the ratio of biomass-derived components when the polyester resin is used in an ink composition for offset printing. The biomass degree of the polyester resin can be calculated by the following equation.

$$\text{Equation: Biomass degree (\%)} = \text{(charged mass of biomass components)} \times 100/\text{total charged mass}$$

The solubility parameter sp value of the polyester resin by a turbidimetric titration method is preferably 9.0 to 11.0 $(\text{cal/cm}^3)^{1/2}$, more preferably 9.0 to 10.0 $(\text{cal/cm}^3)^{1/2}$ from the viewpoint of excellent compatibility with the monomers and oligomers contained in the ink composition when used the polyester resin is used in an active energy ray-curable ink composition for offset printing.

Here, the calculation of the solubility parameter sp value by a turbidimetric titration method will be described. This is a value that can be measured by turbidimetric titration, which is a simple actual measurement method, and is calculated according to the following equation by K. W. SUH and J. M. CORBETT. For the calculation of sp value by this method, J. Appl. Polym. Sci. 1968,12,2359 can be referred to.

$$\text{Equation: sp value} = (V_{ml}^{1/2} \cdot \delta H + V_{mh}^{1/2} \cdot \delta D)/(V_{ml}^{1/2} + V_{mh}^{1/2})$$

In turbidimetric titration, n-hexane, which is a poor solvent having a low sp value, may be added to a solution in which 0.5 g of sample is dissolved in 10 mL of toluene or 10 mL of trimethylolpropane triacrylate (TMPTA), which is a good solvent, the titer H (mL) at the turbidity may be read, the titer D (mL) at the turbidity when ethanol, which is a poor solvent having a high sp value, is added to the toluene solution may be read similarly, these may be substituted into the following equations to calculate $V_{ml}$, $V_{mh}$, $\delta H$, and $\delta D$, and the $V_{ml}$, $V_{mh}$, $\delta H$, and $\delta D$ may be substituted into the above equation.

The molecular volume and sp value of each solvent used in the turbidimetric titration are as follows.

Molecular volume of good solvent $\phi 0$ Toluene: 106.28 mL/mol, TMPTA: 279.55 mL/mol
Molecular volume of poor solvent having low sp value $\phi l$ n-Hexane: 131.61 mL/mol
Molecular volume of poor solvent having high sp value $\phi h$ Ethanol: 58.39 mL/mol
Sp value of each solvent Toluene: 9.14, TMPTA: 9.88, n-hexane: 7.28, ethanol: 12.58

$$V_{ml} = (\phi 0 \cdot \phi l)/\{(1 - VH) \cdot \phi l + VH \cdot \phi 0\}$$

$$V_{mh} = (\phi 0 \cdot \phi h)/\{(1 - VD) \cdot \phi h + VD \cdot \phi 0\}$$

$$VH = H/(M + H)$$

$$VD = D/(M + D)$$

$$\delta H = (\delta 0 \cdot M)/(M + H) + (\delta l \cdot H)/(M + H)$$

$$\delta D = (\delta 0 \cdot M)/(M + D) + (\delta l \cdot D)/(M + D)$$

δ0: sp value of good solvent

δl: sp value of poor solvent having low sp value

δh: sp value of poor solvent having high sp value

H: Titer of poor solvent having low sp value (mL)

D: Titer of poor solvent having high sp value (mL)

M: Amount of good solvent (mL)

VH: Volume fraction of titer of poor solvent having low sp value (%)

VD: Volume fraction of titer of poor solvent having high sp value (%)

The acid value of the polyester resin is preferably 1 to 50 mg KOH/g, more preferably 1 to 25 mg KOH, still more preferably 1 to 10 mg KOH from the viewpoint of suppressing the occurrence of troubles such as abnormal emulsification in the ink composition when the polyester resin is used in an ink composition for offset printing. The acid value is a value measured in conformity with JIS K5601-2-1.

The weight average molecular weight of the polyester resin is preferably 25, 000 or more, more preferably 30, 000 or more from the viewpoint that the pigment contained in the ink composition for offset printing exhibits excellent dispersibility and favorable viscoelasticity can be imparted to the ink composition, and the weight average molecular weight of the polyester resin is preferably 60,000 or less, more preferably 50,000 or less from the viewpoint of favorable solubility and excellent handling.

The weight average molecular weight can be measured by gel permeation chromatography (GPC). As an example, chromatography is performed using Water 2690 (manufactured by Waters Corporation) as a GPC instrument, and PLgel, 5 μ, and MIXED-D (manufactured by Polymer Laboratories Inc.) as a column under the conditions of a tetrahydrofuran as a developing solvent, a column temperature of 25°C, a flow velocity of 1 ml/min, an RI detector, a sample injection concentration of 10 milligrams/milliliter, and an injection volume of 100 microliters, and the weight average molecular weight can be determined in terms of polystyrene.

<Ink composition for offset printing>

The ink composition for offset printing of the present invention contains the polyester resin. The polyester resin has a biomass degree of 80% or more, and thus the ratio of biomass-derived components in an ink composition for offset printing containing this polyester resin can be increased. Hence, this ink composition for offset printing reduces the environmental burden, and is a product suitable for receiving various environment-related certifications such as IG mark certification.

The content of the polyester resin in the ink composition for offset printing is preferably 10% by mass or more, more preferably 15% by mass or more, still more preferably 20% by mass or more from the viewpoint of imparting favorable scratch resistance and abrasion resistance to the coating film printed using the ink composition. The content of the polyester resin is preferably 70% by mass or less, more preferably 60% by mass or less from the viewpoint of printability and viscoelasticity of the ink composition.

The polyester resin can be preferably used as a constituent component of an active energy ray-curable ink composition for offset printing. The active energy ray-curable ink composition for offset printing usually contains a compound (monomer, oligomer or the like) having an ethylenically unsaturated bond and a photopolymerization initiator, and is cured as the molecular weight of the compound having an ethylenically unsaturated bond is increased by radicals generated from the photopolymerization initiator when being irradiated with active energy rays.

The active energy rays are only required to be those that cleave the chemical bonds in the photopolymerization initiator to generate radicals, and examples thereof include ultraviolet rays and electron beams. Examples of the active energy ray irradiation device include a metal halide lamp, a high-pressure mercury lamp, an excimer lamp filled with a rare gas, and an ultraviolet light emitting diode (LED).

Examples of the monomer include monofunctional monomers having one ethylenically unsaturated bond in the molecule, and bifunctional or higher functional monomers having two or more ethylenically unsaturated bonds in the molecule. The bifunctional or higher functional monomers can crosslink molecules to each other when the ink composition is cured, and thus contributes to increasing the curing speed and forming a firm film. The monofunctional monomers do not have the crosslinking ability, but contribute to reducing the curing shrinkage associated with crosslinking. As the monomer, various kinds of monomers can be used in combination if necessary.

Examples of the monofunctional monomers include alkyl acrylates such as methyl (meth) acrylate, ethyl (meth) acrylate, butyl (meth)acrylate, hexyl (meth)acrylate, octyl (meth)acrylate, and dodecyl (meth)acrylate; (meth)acrylic acid, ethylene oxide adduct (meth)acrylate, propylene oxide adduct (meth)acrylate, isobornyl (meth)acrylate, cyclohexyl (meth)acrylate, tricyclodecanemonomethylol (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-phenoxypropyl (meth)acrylate, 2-hydroxy-3-butoxypropyl (meth)acrylate, 2-hydroxy-3-methoxypropyl (meth)acrylate, diethylene glycol mono(meth)acrylate, triethylene glycol mono(meth)acrylate, polyethylene glycol mono(meth)acrylate, dipropylene glycol mono(meth)acrylate, polypropylene glycol mono(meth)acrylate, glycerin mono(meth)acrylate, acryoloxyethyl phthalate, 2-(meth)acryloyloxyethyl-2-hydroxyethylphthalate, 2-(meth)acryloyloxypropylphthalate, β-carboxyethyl (meth)acrylate, (meth)acrylic acid dimer, ω-carboxypolycaprolactone mono(meth)acrylate, dimethylaminoethyl (meth)acrylate, diethylaminoethyl (meth)acrylate, N-vinylpyrrolidone, N-vinylformamide, and (meth)acryloylmorpholine. The monofunctional monomers can be used singly or in combination of two or more kinds thereof.

Examples of the bifunctional or higher functional monomers include bifunctional monomers such as ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, butylene glycol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentane di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-butyl-2-ethyl-1,3-propanediol di(meth)acrylate, 2,4-diethyl-1,5-pentanediol di(meth)acrylate tricyclodecanedimethylol di(meth)acrylate, tricyclodecanedimethylol dicaprolactonate di(meth)acrylate, bisphenol A tetraethylene oxide adduct di(meth)acrylate, bisphenol F tetraethylene oxide adduct di(meth)acrylate, bisphenol S tetraethylene oxide adduct di(meth)acrylate, hydrogenated bisphenol A tetraethylene oxide adduct di(meth)acrylate, hydrogenated bisphenol F tetraethylene oxide adduct di(meth)acrylate, hydrogenated bisphenol A di(meth)acrylate, hydrogenated bisphenol F di(meth)acrylate, bisphenol A tetraethylene oxide adduct dicaprolactonate di(meth)acrylate, and bisphenol F tetraethylene oxide adduct dicaprolactonate di(meth)acrylate; trifunctional monomers such as glycerin tri(meth)acrylate, trimethylolpropane tri(meth)acrylate, trimethylolpropane tricaprolactonate tri(meth)acrylate, trimethylolethane tri(meth)acrylate, trimethylolhexane tri(meth)acrylate, trimethyloloctane tri(meth)acrylate, and pentaerythritol tri(meth) acrylate; and tetrafunctional or higher functional monomers such as trimethylolpropane tetra(meth)acrylate, pentaerythritol tetra(meth)acrylate, pentaerythritol tetracaprolactonate tetra(meth)acrylate, diglycerin tetra(meth)acrylate, ditrimethylolpropane tetra(meth)acrylate, ditrimethylolpropane tetracaprolactonate tetra (meth) acrylate, ditrimethylolethane tetra (meth) acrylate, ditrimethylolbutane tetra (meth) acrylate, ditrimethylolhexane tetra (meth) acrylate, ditrimethyloloctane tetra(meth)acrylate, dipentaerythritol penta(meth)acrylate, dipentaerythritol hexa(meth)acrylate, tripentaerythritol hexa(meth)acrylate, tripentaerythritol hepta(meth)acrylate, tripentaerythritol octa(meth)acrylate, and tripentaerythritol polyalkylene oxide hepta (meth) acrylate. Among these, trimethylolpropane triacrylate (TMPTA; trifunctional), ditrimethylolpropane tetraacrylate (DITMPTA; tetrafunctional), dipentaerythritol hexaacrylate (DPHA; hexafunctional), glycerin propoxy triacrylate (GPTA; trifunctional), hexanediol diacrylate (HDDA; bifunctional) and the like are preferable. The bifunctional or higher functional monomers can be used singly or in combination of two or more kinds thereof.

As a kind of monomer, there is an epoxidized vegetable oil acrylate obtained by modifying an epoxidized vegetable oil with an acryloyl group. This is a compound obtained by ring-opening addition polymerization of (meth) acrylic acid to the epoxy group of an epoxidized vegetable oil obtained by epoxidizing double bonds of an unsaturated vegetable oil with an oxidizing agent such as peracetic acid or perbenzoic acid. Unsaturated vegetable oils are triglycerides in which at least one fatty acid has at least one carbon-carbon unsaturated bond, and examples thereof include hemp seed oil, linseed oil, perilla oil, oiticica oil, olive oil, cacao oil, kapok seed oil, Torreya nucifera seed oil, mustard oil, apricot kernel oil, tung oil, kukui nut oil, walnut oil, poppyseed oil, sesame oil, safflower oil, radish seed oil, soybean oil, chaulmoogra oil, camellia oil, corn oil, rapeseed oil, niger seed oil, rice bran oil, palm oil, castor oil, sunflower oil, grape seed oil, lentil oil, pine seed oil, cottonseed oil, coconut oil, peanut oil, and dehydrated castor oil. This kind of monomer is derived from vegetable oil, and thus helps to increase the amount of biomass components in the ink composition. As epoxidized vegetable oil acrylates, various kinds are commercially available and these may be thus used.

The oligomer is a component that is polymerized as described above to have a higher molecular weight, but are originally a component having a relatively high molecular weight, and is thus also used for the purpose of imparting proper viscosity and elasticity to the ink composition. Examples of the oligomer include an epoxy-modified (meth)acrylate exemplified as an ester of a hydroxyl group generated after the epoxy group contained in an epoxy compound such as an epoxy resin is opened with an acid or a base and (meth)acrylic acid, rosin-modified epoxy acrylate, a polyester-modified (meth)acrylate exemplified as an ester of (meth)acrylic acid and a terminal hydroxyl group of a polycondensation product of a dibasic acid and a diol, a polyether-modified (meth) acrylate exemplified as an ester of a terminal hydroxyl group of a polyether compound and (meth)acrylic acid, and a urethane-modified (meth) acrylate exemplified as an ester of a terminal hydroxyl group in a condensate of a polyisocyanate compound and a polyol compound and (meth)acrylic acid. Such oligomers are commercially available and can be procured, for example, under trade names such as EBECRYL series manufactured by DAICEL-ALLNEX LTD., CN and SR series manufactured by SARTOMER, Aronix M-6000 series, 7000 series, and 8000 series, Aronix M-1100, Aronix M-1200, and Aronix M-1600 manufactured by TOAGOSEI CO., LTD., and NK Oligo manufactured by SHIN-NAKAMURA CHEMICAL Co., Ltd. The oligomers can be used singly or in combination of two or more kinds thereof.

A polymer having an ethylenically unsaturated bond may be used as a constituent component of the active energy ray-curable ink composition for offset printing. The polymer having an ethylenically unsaturated bond is a component of which the molecular weight is increased together with the above-described monomer and oligomer, has a high molecular weight before being irradiated with active energy rays as well, and is thus a component useful for improving the viscoelasticity of the ink composition. Such a polymer is used, for example, in a state of being dissolved or dispersed in a monomer that is a liquid having a low viscosity. Examples of the polymer having an ethylenically unsaturated bond include polydiallyl phthalate, an acrylic resin having an unreacted unsaturated group, and an acrylic modified phenol resin.

In the active energy ray-curable ink composition for offset printing, the compound having an ethylenically unsaturated bond is preferably 5 to 60% by mass, more preferably 8 to 40% by mass, still more preferably 10 to 30% by mass from the viewpoint of achieving both favorable curability and favorable printability. In the active energy ray-curable ink composition for offset printing, the polymer having an ethylenically unsaturated bond is preferably 0 to 30% by mass, more preferably 0 to 20% by mass, still more preferably 0 to 15% by mass from the viewpoint of imparting proper viscoelasticity to the ink composition to suppress the occurrence of misting and the like, and securing favorable curability of the ink composition.

The photopolymerization initiator is not particularly limited as long as it generates radicals when being irradiated with active energy rays. Examples of the photopolymerization initiator include benzophenone, diethylthioxanthone, 2-methyl-1-(4-methylthio)phenyl-2-morpholinopropan-1-one, 4-benzoyl-4'-methyldiphenylsulfide, 1-chloro-4-propoxythioxanthone, isopropylthioxanthone, 2-hydroxy-2-methyl-1-phenylpropan-1-one, 1-hydroxycyclohexylphenylketone, bis-2,6-dimethoxybenzoyl-2,4,4-trimethylpentylphosphinoxide, 1-[4-(2-hydroxyethoxy)-phenyl]-2-hydroxy-2-methyl-1-propane -1-one, 2,2-dimethyl-2-hydroxyacetophenone, 2,2-dimethoxy-2-phenylacetophenone, 2,4,6-trimethylbenzyl-diphenylphosphinoxide, and 2-benzyl-2-dimethylamino-1-(morpholinophenyl)-butane-1-one. Photopolymerization initiators are commercially available and can be procured, for example, from BASF SE under trade names such as Irgacure 907, Irgacure 369, Irgacure 184, Irgacure 379, Irgacure 819, and TPO and from Lamberti S.p.A. under trade names such as DETX. The photopolymerization initiators can be used singly or in combination of two or more kinds thereof.

In the active energy ray-curable ink composition for offset printing, the photopolymerization initiator is preferably 1% to 20% by mass, more preferably 2% to 15% by mass from the viewpoint of securing sufficient curability and favorable internal curability.

A coloring component can be added to the ink composition for offset printing, if necessary. The coloring component is a component added to impart coloring power, hiding power and the like to the ink composition, and examples thereof include a coloring pigment, a white pigment, and a metal powder. Examples of such a coloring component include organic and/or inorganic pigments conventionally used in ink compositions without particular limitation. When the ink composition for offset printing does not contain a coloring component, the ink composition is preferably used for coating applications and the like.

Examples of the coloring component include yellow pigments such as disazo yellow (pigment yellow 12, pigment yellow 13, pigment yellow 14, pigment yellow 17, and pigment yellow 1) and Hansa yellow, magenta pigments such as Brilliant Carmine 6B, Lake Red C, and Watching Red, cyan pigments such as phthalocyanine blue, phthalocyanine green, and alkaline blue, black pigments such as carbon black, white pigments such as titanium oxide, and metal powders such as aluminum paste and bronze powder.

In the ink composition for offset printing, the coloring component is about 1% to 30% by mass, but is not particularly limited. When a colored ink composition is prepared, it is also possible to concurrently use a coloring component of another color as a complementary color, or to add an ink composition of another color.

In addition to the respective components, other components may be added to the ink composition for offset printing if necessary. Examples of the other components include an extender pigment, a resin component, a polymerization inhibitor, a dispersant, salts such as a phosphate, waxes such as polyethylene-based wax, olefin-based wax, and Fischer-Tropsch wax, and alcohols.

The extender pigment is a component for imparting proper properties such as printability and viscoelasticity to the ink composition, and various kinds of extender pigments usually used in the preparation of ink compositions can be used. Examples of the extender pigment include clay, kaolinite (kaolin), barium sulfate, magnesium sulfate, calcium carbonate, silicon oxide (silica), bentonite, talc, mica, and titanium oxide. In the ink composition for offset printing, the extender pigment is about 0 to 30% by mass, but is not particularly limited.

The resin component is a component that contributes to imparting proper properties such as printability and viscoelasticity to the ink composition. Examples of the resin component include various kinds of resins that have been conventionally used in applications of ink compositions for printing. The resin component is preferably one exhibiting compatibility with the monomers or oligomers, and examples thereof include styrene-acrylic resin, acrylic resin, alkyd resin, rosin-modified phenol resin, rosin-modified maleic acid resin, rosin-modified alkyd resin, rosin-modified petroleum resin, rosin ester resin, petroleum resin-modified phenolic resin, vegetable oil-modified alkyd resin, and petroleum resin.

When the resin component is added to the ink composition, in the active energy ray-curable ink composition for offset printing, the resin component is preferably 30% by mass or less, more preferably 20% by mass or less, still more preferably 10% by mass or less from the viewpoint of imparting proper viscoelasticity to the ink composition to suppress the occurrence of misting and the like, and securing favorable curability of the ink composition.

The polymerization inhibitor can suppress that the polymerization reaction proceeds and the ink composition is thickened during storage. Examples of the polymerization inhibitor preferably include phenol compounds such as butylhydroxytoluene and tocopherol acetate, nitrosamines, benzotriazoles, and hindered amines. Among these, butylhydroxytoluene is more preferable. The content of the polymerization inhibitor in the ink composition is about 0.01 to 1% by mass.

The dispersant is used to disperse the coloring component and the extender pigment contained in the ink composition in a favorable state. As the dispersant, various kinds of dispersants are commercially available, and examples thereof include DISPERBYK (trade name) series manufactured by BYK.

A conventionally known method can be applied to prepare the ink composition for offset printing of the present invention using the respective components. At this time, the polyester resin may be dissolved in an oil component such as vegetable oil or mineral oil to form a varnish, or may be dissolved in a compound having an ethylenically unsaturated bond to form a varnish. As the viscosity of the ink composition, a value of 10 to 70 Pa·s at 25°C measured using a Raleigh viscometer may be exemplified, but the viscosity is not particularly limited.

<Printed work and production method for the same>

The printed work of the present invention includes a printed layer formed from the ink composition for offset printing. The production method for a printed work of the present invention includes a step of performing printing using the ink composition for offset printing. Printing is carried out using normal offset lithographic printing technologies, and the offset lithographic printing may be a printing method with water using dampening water, or may be a waterless printing method in which printing is performed by using a dedicated lithographic printing plate without using dampening water.

EXAMPLES

Hereinafter, the present invention will be described with reference to Examples and the like, but the present invention is not limited thereto.

<Example 1>

<Production of polyester resin>

Into a reaction vessel with a stirrer, a reflux condenser, and a thermometer, 50 parts by mass of epoxidized soybean oil (manufactured by ADEKA CORPORATION, trade name: "O-130P"), 150 parts by mass of disproportionated rosin (manufactured by FUJIFILM Wako Pure Chemical Corporation, trade name: "dehydroabietic acid", acid value: 136 mg KOH/g), and 0.5 part by mass of triphenylphosphine as a catalyst were charged, and the mixture was reacted at 180°C for 5 hours to conduct an addition reaction, whereby a mixture containing a polyol (adduct) was prepared. Further, 10 parts by mass of 1,2-cyclohexene dicarboxylic acid was added thereto, the temperature of the mixture was raised to 250°C, heating was performed for 2 hours, then 10 parts by mass of glycerin was added thereto, the mixture was reacted at 250°C for another 8 hours to conduct a polycondensation (dehydration condensation) reaction, whereby the polyester resin of Example 1 was produced. The obtained polyester resin had a weight average molecular weight of 35,000, an acid value of 7.6 mg KOH/g, a sp value of 9.10 by a turbidimetric titration method, and a biomass degree of 94.3%.

<Preparation of ink composition for offset printing>

Into a reaction vessel with a cooling tube, 80 parts by mass of the polyester resin obtained above, 19 parts by mass of ditrimethylolpropane triacrylate (DI-TMPTA), and 1 part by mass of butylhydroxytoluene (BHT) were charged, and heated and stirred at 100°C for 1 hour to prepare a varnish. Subsequently, 70 parts by mass of the obtained varnish, 15 parts by mass of carbon black (manufactured by Mitsubishi Chemical Corporation, trade name: "#60"), 7 parts by mass of Irgacure 907 (manufactured by BASF SE), and 3 parts by mass of 4,4'-bis(diethylamino)benzophenone (EAB) were mixed together, and kneaded using a three-roll mill at a roll temperature of 40°C until the particle size became 5.0 $\mu$m or less, 5 parts by mass of trimethylolpropane triacrylate (TMPTA) was added thereto, whereby an active energy ray-curable ink composition for offset printing was prepared.

<Creation of printed work>

On aurora coated paper, 0.1 cc of the ink composition for offset printing obtained above was spread using an RI color developing machine (2-split roll, manufactured by Meishin Seisakusho Co., Ltd.), and immediately irradiated with ultraviolet rays (metal halide lamp, irradiation quantity: 36 mJ/cm$^2$), whereby a printed work was created.

<Examples 2 to 10 and Comparative Examples 1 to 6>

The same operation as in Example 1 was carried out except that the raw materials of the polyester resins used in the respective Examples and Comparative Example were changed to the raw materials and mixed amounts presented in Table 1, whereby the polyester resins of the respective Examples and Comparative Examples were produced, then ink compositions for offset printing were prepared, and printed works were created.

The respective items of the printed works obtained above were evaluated according to the following evaluation methods. The results are presented in Table 1.

[Scratch resistance]

The printed coating film of the printed work was rubbed with a nail, and the number of rubbing times until the coating film was scraped was evaluated according to the following criteria.

5: Coating film is not scraped by 10 times of rubbing.
4: Coating film is scraped by 8 to 9 times of rubbing.
3: Coating film is scraped by 5 to 7 times of rubbing.
2: Coating film is scraped by 2 to 4 times of rubbing.
1: Coating film is scraped by 1 time of rubbing.

[Abrasion resistance]

The printed coating film of the printed work was tested using a taber type abrasion tester (manufactured by YASUDA SEIKI SEISAKUSHO, LTD.) under the test conditions (500 g × 10 times, cushioning paper: aurora coated paper), and the residual ratio of the printed coating film after the test was visually evaluated according to the following criteria.

5: Coating film is not removed.
4: Coating film is slightly removed.
3: About half of coating film is removed.
2: Coating film is mostly removed.
1: Coating film is completely removed.

[Table 1]

| | | | | Biomass degree | Example | | | | | | | | | | Comparative Example | | | | | |
|---|---|---|---|---|---|---|---|---|---|---|---|---|---|---|---|---|---|---|---|---|
| | | | | | 1 | 2 | 3 | 4 | 5 | 6 | 7 | 8 | 9 | 10 | 1 | 2 | 3 | 4 | 5 | 6 |
| Polyester resin | Polyol mixture (A) | Epoxidized vegetable oil | Epoxidized soybean oil | 95% | 50 | 30 | | 50 | 50 | 50 | 50 | 50 | 50 | 50 | | 50 | 100 | 150 | 50 | 50 |
| | | | Epoxidized linseed oil | 95% | | | 50 | | | | | | | | | | | | | |
| | | Epoxy compound | Bisphenol A type epoxy resin | 0% | | | | | | | | | | | 50 | | | | | |
| | | Rosin | Disproportionated rosin | 100% | 150 | 150 | 150 | | 150 | 150 | 150 | 150 | 150 | 150 | 150 | | 100 | 50 | 150 | 150 |
| | | | Polymerized rosin | 100% | | | | 150 | | | | | | | | | | | | |
| | | Carboxy-containing compound | Stearic acid | 0% | | | | | | | | | | | | 150 | | | | |
| | Polycarboxylic acid (B) | | 1,2-Cyclohexenedicarboxylic acid | 0% | 10 | 10 | 10 | 10 | 10 | 10 | 5 | 30 | 10 | 10 | 10 | 10 | 10 | 10 | | 10 |
| | Plant-derived polyol (C) | | Glycerin | 100% | 10 | 10 | 10 | 10 | | | 10 | 10 | 5 | 30 | 10 | 10 | 10 | 10 | | |
| | | | 1,3-Propanediol | 100% | | | | | 10 | | | | | | | | | | | |
| | | | 1,4-Butanediol | 100% | | | | | | | | 10 | | | | | | | | |
| Rosin/epoxidized vegetable oil (mass ratio) | | | | | 3 | 5 | 3 | 3 | 3 | 3 | 3 | 3 | 3 | 3 | 3 | – | 1 | 0.3 | 3 | 3 |
| Weight average molecular weight (× 10⁴) | | | | | 3.5 | 3.3 | 3.4 | 4.5 | 3.4 | 3.2 | 3.2 | 4.3 | 3.3 | 3.2 | 3.2 | 0.9 | 2.1 | 0.9 | 0.5 | 0.8 |
| Acid value (mg KOH/g) | | | | | 7.6 | 7.5 | 7.5 | 6.5 | 7.5 | 7.4 | 7.4 | 23 | 8.7 | 2.1 | 6.7 | 9.2 | 8.6 | 3.2 | 35 | 43 |
| sp value | | | | | 9.10 | 9.09 | 9.12 | 9.09 | 9.13 | 9.12 | 9.12 | 9.30 | 9.12 | 9.25 | 9.08 | 8.99 | 9.12 | 9.02 | 9.01 | 9.12 |
| Biomass degree | | | | | 94.3% | 94.3% | 94.3% | 94.3% | 94.3% | 94.3% | 96.5% | 86.5% | 94.2% | 94.8% | 72.7% | 26.1% | 93.2% | 92.0% | 98.8% | 94.0% |
| Evaluation | | Scratch resistance | | | 5 | 5 | 5 | 5 | 5 | 5 | 5 | 5 | 5 | 5 | 5 | 1 | 2 | 1 | 1 | 1 |
| | | Abrasion resistance | | | 5 | 5 | 5 | 5 | 5 | 5 | 5 | 5 | 5 | 5 | 5 | 1 | 2 | 1 | 1 | 1 |

In Table 1, epoxidized soybean oil (biomass degree: 95%) denotes trade name: "O-130P" (manufactured by ADEKA CORPORATION);

Epoxidized linseed oil (biomass degree: 95%) denotes trade name: "O-180A" (manufactured by ADEA CORPORATION);
Bisphenol A type epoxy resin (biomass degree: 0%) denotes trade name: "EP-4100" (manufactured by ADEKA CORPORATION);
Disproportionated rosin (biomass degree: 100%) denotes trade name: "dehydroabietic acid" (manufactured by FUJIFILM Wako Pure Chemical Corporation); and
Polymerized rosin (biomass degree: 100%) denotes trade name: "ARDYME R-95" (manufactured by ARAKAWA CHEMICAL INDUSTRIES LTD.).

**Claims**

1.  A polyester resin that is a polycondensation product of a polyol mixture (A) containing an adduct of an epoxidized vegetable oil and rosin, a polycarboxylic acid (B), and a plant-derived polyol (C), wherein

    a mass ratio (rosin/epoxidized vegetable oil) of the rosin to the epoxidized vegetable oil is 2 or more and 10 or less, and
    a biomass degree is 80% or more.

2.  The polyester resin according to claim 1, wherein an acid value is 1 to 50 mg KOH/g.

3.  The polyester resin according to claim 1 or 2, wherein a solubility parameter sp value by a turbidimetric titration method is 9.0 to 11.0 $(\text{cal/cm}^3)^{1/2}$.

4.  The polyester resin according to any one of claims 1 to 3, wherein a weight average molecular weight is 25,000 to 60,000.

5.  An ink composition for offset printing comprising the polyester resin according to any one of claims 1 to 4.

6.  The ink composition for offset printing according to claim 5, which is an active energy ray-curable type.

7.  A printed work comprising a print layer formed from the ink composition for offset printing according to claim 5 or 6.

8.  A production method for a printed work, the method comprising a step of performing printing using the ink composition for offset printing according to claim 5 or 6.

**INTERNATIONAL SEARCH REPORT**

| | International application No. |
|---|---|
| | PCT/JP2020/041855 |

A. CLASSIFICATION OF SUBJECT MATTER
Int. Cl. C08L67/06(2006.01)i, C09D11/104(2014.01)i, C08G63/123(2006.01)i
FI: C08G63/123, C08L67/06, C09D11/104

According to International Patent Classification (IPC) or to both national classification and IPC

B. FIELDS SEARCHED

Minimum documentation searched (classification system followed by classification symbols)
Int. Cl. C08L67/06, C09D11/104, C08G63/123

Documentation searched other than minimum documentation to the extent that such documents are included in the fields searched
Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2015-82111 A (XEROX CORP.) 27 April 2015, | 1-4 |
| A | paragraphs [0004]-[0009], example 1 | 5-8 |
| Y | JP 2007-31498 A (MEIDENSHA CORP.) 08 February 2007, paragraph [0021] | 1-4 |
| Y | JP 2017-14427 A (UBE INDUSTRIES, LTD.) 19 January 2017, paragraph [0019] | 1-4 |
| Y | JP 2017-173695 A (TOYO INK SC HOLDINGS CO., LTD.) 28 September 2017, paragraphs [0129]-[0132] | 1-4 |
| A | JP 2004-155908 A (ARAKAWA CHEMICAL INDUSTRIES, LTD.) 03 June 2004, entire text, (in particular, paragraph [0022], example 1) | 1-8 |

☒ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04.12.2020 | 28.12.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2020/041855 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2013-68911 A (FUJI XEROX CO., LTD.) 18 April 2013, entire text, (in particular, paragraphs [0065]-[0077], [0172]) | 1-8 |
| A | JP 2007-248704 A (DAINIPPON INK AND CHEMICALS, INC.) 27 September 2007, entire text, (in particular, synthesis examples 4-5) | 1-8 |
| A | JP 2005-225903 A (TOYO INK MANUFACTURING CO., LTD.) 25 August 2005, entire text, (in particular, examples R2) | 1-8 |
| A | JP 2000-265104 A (HARIMA CHEMICALS, INC.) 26 September 2000, entire text, (in particular, example 1) | 1-8 |
| A | JP 2018-65912 A (SAKATA INKS) 26 April 2018, entire text | 1-8 |
| A | CN 104119790 A (SUZHOU JINGYU NEW MATERIAL CO., LTD.) 29 October 2014, entire text | 1-8 |
| P, A | WO 2020/039923 A1 (HARIMA CHEMICALS, INC.) 27 February 2020, entire text | 1-8 |
| A | US 9309355 B1 (XEROX CORPORATION) 12 April 2016, entire text | 1-8 |

Form PCT/ISA/210 (continuation of second sheet) (January 2015)

INTERNATIONAL SEARCH REPORT

Information on patent family members

International application No.

PCT/JP2020/041855

| Patent Documents referred to in the Report | Publication Date | Patent Family | Publication Date |
|---|---|---|---|
| JP 2015-82111 A | 27.04.2015 | US 2015/0111141 A1 paragraphs [0004]-[0009], example 1 | |
| JP 2007-31498 A | 08.02.2007 | (Family: none) | |
| JP 2017-14427 A | 19.01.2017 | (Family: none) | |
| JP 2017-173695 A | 28.09.2017 | (Family: none) | |
| JP 2004-155908 A | 03.06.2004 | (Family: none) | |
| JP 2013-68911 A | 18.04.2013 | (Family: none) | |
| JP 2007-248704 A | 27.09.2007 | (Family: none) | |
| JP 2005-225903 A | 25.08.2005 | (Family: none) | |
| JP 2000-265104 A | 26.09.2000 | (Family: none) | |
| JP 2018-65912 A | 26.04.2018 | (Family: none) | |
| CN 104119790 A | 29.10.2014 | (Family: none) | |
| WO 2020/039923 A1 | 27.02.2020 | (Family: none) | |
| US 9309355 B1 | 12.04.2016 | (Family: none) | |

Form PCT/ISA/210 (patent family annex) (January 2015)

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014173070 A

- JP 2018065912 A

**Non-patent literature cited in the description**

- **K. W. SUH ; J. M. CORBETT.** *J. Appl. Polym. Sci.,* 1968, vol. 12, 2359